# EUROPÄISCHE PATENTSCHRIFT

(11) **EP 1 091 864 B1**
(45) Veröffentlichungstag und Bekanntmachung des Hinweises auf die Patenterteilung: **08.09.2004**
(21) Anmeldenummer: 99927870.8
(22) Anmeldetag: 04.06.1999
(51) Int. Cl.: B60R 21/05, B62D 1/19

(54) **HÖHENVERSTELLBARE LENKVORRICHTUNG FÜR EIN KRAFTFAHRZEUG**
HEIGHT ADJUSTABLE STEERING DEVICE FOR A MOTOR VEHICLE
SYSTEME DE DIRECTION REGLABLE EN HAUTEUR POUR UN VEHICULE A MOTEUR

(30) Priorität: 30.06.1998 DE 19829061
(43) Veröffentlichungstag der Anmeldung: 18.04.2001
(73) Patentinhaber: Volkswagen Aktiengesellschaft, 38436 Wolfsburg (DE)
(72) Erfinder: FINKE, Oliver, D-38464 Gross Twülpstedt (DE); KERK, Henning, D-38459 Bahrdorf (DE)
(86) Internationale Anmeldenummer: PCT/EP1999/003865
(87) Internationale Veröffentlichungsnummer: WO 2000/000368

(56) Entgegenhaltungen:
- US-A- 4 949 990

## Beschreibung

Die Erfindung bezieht sich auf eine Höhenverstellbare Lenkvorrichtung für ein Kraftfahrzeug, umfassend eine Lenksäule, einen Lenkungsbock zur Abstützung bzw. Lagerung der Lenksäule mit einem unteren Bereich, der sich in Richtung eines Kniebereiches eines Fahrzeugführers erstreckt, eine Abdeckplatte, die zwischen dem unteren Bereich des Lenkungsbocks und dem Kniebereich vorgesehen ist, und ein Abstützelement, das zwischen dem unteren Bereich des Lenkungsbocks und der Abdeckplatte angeordnet ist,

Im Stand der Technik sind unterschiedlich ausgebildete höhenverstellbare Lenkvorrichtungen bekannt. Beispielsweise zeigt die EP-A-0 634 314 eine Lenkvorrichtung für ein Kraftfahrzeug, bei welcher der für die Abstützung bzw. Lagerung der Lenksäule vorgesehene Lenkungsblock eine Halteplatte aufweist, die über Schraubelemente fixiert ist.

Weiterhin ist im Stand der Technik eine Lenkvorrichtung bekannt (DE-U-295 01 552), bei der die Lenksäule der Lenkvorrichtung mehrere Deformationselemente aufweist, die bei einem Unfall oder Crash eine bestimmte Führung bzw. Deformation der Lenksäule gewährleisten sollen. Hierbei sind "Laschen" aus einem Führungsrohr der Lenksäule ausgestanzt und U-förmig gebogen, wobei der zurückgebogene Steg bzw. Schenkel dann fixiert ist. Entlang des Führungsrohres der Lenksäule sind längs laufende Rillen vorgesehen, die einen Aufreißstreifen begrenzen. Für den Fall, daß bei einem Unfall oder Crash die Lenksäule eine entsprechende Kraft aufnehmen muß bzw. deformiert wird, kann nun die Bewegung bzw. Deformation des Führungsrohres durch die Ausbildung der Laschen und der längs laufenden Rillen bestimmt werden, wobei jeweils eine Lasche und ein Aufreißstreifen ein Deformationselement bilden.

Weiterhin sind im Stand der Technik höhenverstellbare Lenkvorrichtungen für Kraftfahrzeuge bekannt, bei denen der Lenkungsbock zur Abstützung bzw. Lagerung der Lenksäule so angeordnet ist, daß sich der untere Bereich des Lenkungsbockes in Richtung auf den Kniebereich eines Fahrzeugführers erstreckt. Im allgemeinen wird die höhenverstellbare Lenkvorrichtung gegenüber dem Kniebereich durch eine zwischen dem unteren Bereich des Lenkungsbockes und dem Kniebereich des Fahrzeugführers vorgesehene Abdeckplatte, insbesondere eine Einlage in der Unterschale begrenzt. Bei einem kann Unfall das Knie des Fahrers nach oben gegen den Lenkungsbock geschleudert werden, wobei der Fahrer Verletzungen davonträgt und der Lenkungsbock zerstört wird.

Eine Lenkvorrichtung der eingangs genannten Art ist aus der US 4,949,990 A bekannt. Das Abstützelement ist hierbei integral mit dem Lenkungsbock oder einem Abschnitt der Lenksäule als geschlossener Bügel ausgebildet, der sich mit seinem Scheitel gegen die gewölbte Abdeckplatte abstützt. Bei einem Aufprall des Knies eines Fahrzeugführers auf die Abdeckplatte wird das Knie aufgrund der Wölbung an der Seite des Lenkungsbockes vorbeigelenkt. Diese seitliche Ablenkung wird durch eine gezielte, asymmetrische Verformung des Abstützelementes unterstützt, das hierzu einknickt. Zur Vermeidung von Knieverletzungen muß hierbei sichergestellt werden, daß in dem Bereich, in den das Knie bei einem Unfall hinbewegt wird, keine weiteren Verletzungsgefahren drohen.

Vor diesem Hintergrund liegt der Erfindung die Aufgabe zugrunde, die Sicherheit gegen Knieverletzungen bei einer höhenverstellbaren Lenkvorrichtung der eingangs genannten Art weiter zu verbessern.

Diese Aufgabe wird durch eine Lenkvorrichtung mit den Merkmalen von Patentanspruch 1 gelöst. Durch ein zwischen dem unteren Bereich des Lenkungsbockes und der Abdeckplatte angeordnetes Abstützelement kann bei einem Unfall die von dem Knie eingeleitete Energie im wesentlichen seitlich abgeleitet werden. Somit werden die durch die Krafteinwirkung verursachten Bewegungen bzw. Deformationen, insbesondere die sich hieraus ergebenden Materialverschiebungen, die die wesentliche Ursache für entsprechende Verletzungen darstellen, in die Seitenbereiche abgeführt bzw. abgeleitet.

Es gibt nun eine Vielzahl von Möglichkeiten, die erfindungsgemäße höhenverstellbare Lenkvorrichtung in vorteilhafter Weise auszugestalten und weiterzubilden. Hierfür darf an dieser Stelle auf die dem Patentanspruch 1 nachgeordneten Patentansprüche verwiesen werden. Die bevorzugte Ausführungsform der Erfindung wird nun anhand einer die erfindungsgemäße Lenkvorrichtung schematisch darstellenden Zeichnung näher erläutert.

In der Zeichnung zeigt
- Fig. 1: die erfindungsgemäße höhenverstellbare Lenkvorrichtung in einer schematischen Darstellung von der Seite,
- Fig. 2: den Lenkungsbock, das Abstützelement sowie die Abdeckplatte der erfindungsgemäßen höhenverstellbaren Lenkvorrichtung aus Fig. 1 in einer schematischen perspektivischen Darstellung und
- Fig. 3: den Lenkungsbock, das Abstützelement sowie die Abdeckplatte aus Fig. 2 einschließlich einer dargestelten Lenksäule in einer schematischen Darstellung von vome.

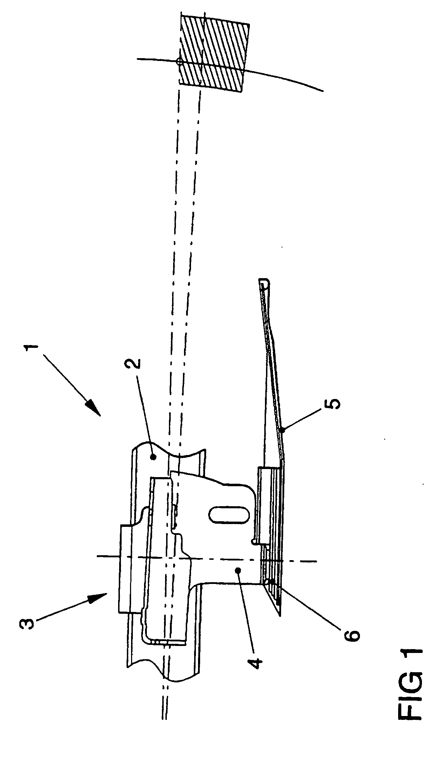

Die Fig. 1 zeigt in einer schematischen Darstellung - teilweise - die höhenverstellbare Lenkvorrichtung 1 für ein nicht näher dargestelltes Kraftfahrzeug. Gut zu erkennen ist die nur teilweise dargestellte Lenksäule 2 und ein Lenkungsbock 3. Der Lenkungsbock 3 ist zur Abstützung bzw. Lagerung der Lenksäule 2 vorgesehen, wobei sich der untere Bereich 4 des Lenkungsbockes 3 in Richtung auf den Kniebereich eines Fahrzeugführers erstreckt. Zwischen dem unteren Bereich 4 des Lenkungsbockes 3 und dem Kniebereich des Fahrzeugführers ist eine Abdeckplatte 5 vorgesehen , die im wesentlichen den Bereich der Lenkvorrichtung 1 nach unten, d. h. gegenüber dem Kniebereich eines Fahrzeugführers abgrenzt.

Die eingangs beschriebenen Nachteile werden dadurch vermieden, d. h. die Sicherheit für den Fahrzeugführer ist dadurch erhöht, daß ein Abstützelement 6 vorgesehen ist, das zwischen dem unteren Bereich 4 des Lenkungsbockes 3 und der Abdeckplatte 5 wirkt, wobei das Abstützelement 6 so angeordnet und ausgebildet ist, daß die bei einem Unfall durch die Bewegung bzw. Deformation der Lenksäule hervorgerufenen Kräfte im wesentlichen seitlich ableitbar sind. Hierdurch können insbesondere Knieverletzungen des Fahrzeugführers größtenteils vermieden werden, da bei einem Unfall die die Knieverletzungen hervorrufenden Materialverschiebungen bzw. Ausbrechungen - auf Grund der seitlichen Ableitung der Kräfte - nunmehr sich mehr in den seitlichen Bereichen abspielen und starke Materialausbrechungen bzw. -verschiebungen direkt nach unten in den Kniebereich des Fahrzeugführers vermieden werden.

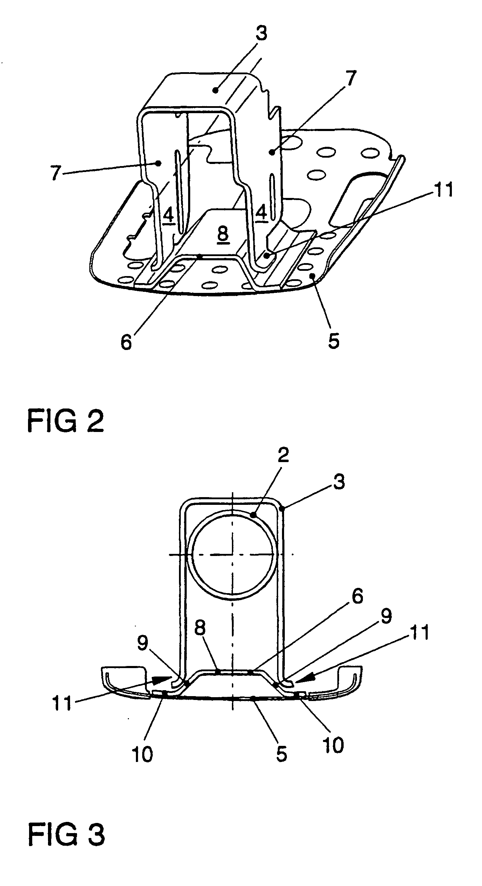

Der Lenkungsbock 3, die Abdeckplatte 5 sowie das Abstützelement 6 ist nun in den Fig. 2 und 3 näher dargestellt. Die Fig. 2 und 3 zeigen einen im wesentlichen U-förmig ausgebildeten Lenkungsbock 3, wobei der Lenkungsbock 3 zwei im wesentlichen gerade verlaufende Schenkel 7 aufweist.

Wie aus Fig. 3 deutlich zu erkennen ist, da hier die Lenksäule 2 - im Gegensatz zu Fig. 2 - zusätzlich dargestellt ist, ist die Lenksäule 2 hier im Bereich zwischen den Schenkeln 7 des Lenkungsbockes 3 geführt, wobei je nach der gewünschten - in Fig. 1 angedeuteten - Höhenverstellung der Lenkvorrichtung 1 die Lenksäule 2 eine obere oder untere Position innerhalb des zwischen den Schenkeln 7 vorgesehenen Bereichs einnehmen kann.

Fig. 2 und Fig. 3 zeigt, daß das Abstützelement 6 eine bestimmte Form aufweist. Vorzugsweise ist das Abstützlelement 6 als ein eine bestimmte Form aufweisendes Blech ausgebildet. Weiterhin ist das Abstützelement 6 auch so ausgebildet, daß es als energieverzehrendes Deformationselement einsetzbar ist.

Im wesentlichen weist das Abstützelement 6 eine U - Form auf, nämlich besitzt zwei zu seinem Querbereich 8 schräg verlaufende Schenkel 9. Jeder schräg verlaufende Schenkel 9 weist zusätzlich einen Seitenbereich 10 auf, der vorzugsweise zum Querbereich 8 des Abstützelementes 6 parallel verläuft.

Die in den Fig. 1 bis 3 zu erkennende Abdeckplatte 5 ist vorzugsweise als Einlage in der Unterschale ausgebildet und an ihren seitlichen Randbereichen entsprechend gelagert.

Wie die Fig. 2 und 3 gut erkennen lassen, sind die unteren Enden 11 des Lenkungsbockes 3 im wesentlichen oberhalb der schräg verlaufenden Scheckel 9 des Abstützelementes 6 vorgesehen.Weiterhin sind die unteren Enden 11 des Lenkungsbockes 3 nach außen gekrümmt. Für den Fall nun, daß das Knie des Fahrers auf Grund der entsprechenden Krafteinwirkung bei einem Unfall oder Crash eine Bewegung nach unten ausführt in Richtung auf die Lenksäule 2 bzw. der Lenkungsbock 3, treffen die schräg verlaufenden Schenkel 9 des Abstützelementes 6 auf die unteren Enden 11 des Lenkungsbockes 3. Auf Grund der schräg verlaufenden Schenkel 9 wird die zunächst nach unten gerichtete Kraft seitlich abgeleitet. Dies führt entsprechend eventuell zu einer Verbiegung des Lenkungsbocks aufgrund des nach oben dringenden Abstützelements 6, wodurch die kinetische Energie aufgezehrt wird.

Je nach Ausbildung und Dimensionierung des unteren Bereichs 4 bzw. der unteren Enden 11 des Lenkungsbockes 3 und des Abstützelementes 6 bzw. der schräg verlaufenden Schenkel 9 erfolgt eine Deformation der unteren Enden 11 bzw. des unteren Bereiches 4 des Lenkungsbockes 3 zur Seite. Dies hat zur Folge, daß ein Durchbruch durch die Abdeckplatte 5 in den meisten Fällen vermieden werden kann und das Knie nicht direkt den Lenkungsbock trifft.

Denkbar ist auch, daß das Abstützelement 6 nicht als separates Bauteil, sondern als integraler Bestandteil der Abdeckplatte 5 ausgebildet wird. Auch andere Ausbildungen bzw. Dimensionierungen für das Abstützelement 6 sind denkbar, wobei diese dann immer so konstruiert bzw. dimensioniert sind, daß eine Ableitung der - anfangs nach unten gerichteten - Kräfte zur Seite möglich ist.

Auf Grund der hier beschriebenen Lenkvorrichtung 1 können insbesondere Knieverletzungen des Fahrzeugführers verringert bzw. verhindert werden.

## Patentansprüche

1. Höhenverstellbare Lenkvorrichtung (1) für ein Kraftfahrzeug, umfassend:
- eine Lenksäule (2),
- einen Lenkungsbock (3) zur Abstützung bzw. Lagerung der Lenksäule (2) mit einem unteren Bereich (4), der sich in Richtung eines Kniebereiches eines Fahrzeugführers erstreckt,
- eine Abdeckplatte (5), die zwischen dem unteren Bereich (4) des Lenkungsbocks (3) und dem Kniebereich vorgesehen ist, und
- ein Abstützelement (6), das zwischen dem unteren Bereich (4) des Lenkungsbocks (3) und der Abdeckplatte (5) angeordnet ist,
**dadurch gekennzeichnet,**
- **daß** der Lenkungsbock (3) an seinem unteren Bereich (4) mit zwei freien unteren Enden (11) auf das Abstützelement (6) auftrifft, und
- **daß** infolge einer Bewegung bzw. Deformation der Lenksäule (2) bei einer unfallbedingt auf die Abdeckplatte (5) einwirkenden Kraft des Knies des Fahrers die freien unteren Enden (11) quer zur Kraftwirkungsrichtung seitlich nach außen spreizen.

2. Lenkvorrichtung nach dem vorhergehenden Anspruch, **dadurch gekennzeichnet, daß** der Lenkungsbock (3) im wesentlichen U-förmig ausgebildet ist.

3. Lenkvorrichtung nach einem der vorhergehenden Ansprüche, **dadurch gekennzeichnet, daß** der Lenkungsbock (3) zwei im wesentlichen gerade verlaufende Schenkel (7) aufweist.

4. Lenkvorrichtung nach einem der vorhergehenden Ansprüche, **dadurch gekennzeichnet, daß** im Bereich zwischen den Schenkeln (7) die Lenksäule (2) geführt ist.

5. Lenkvorrichtung nach einem der vorhergehenden Ansprüche, **dadurch gekennzeichnet, daß** das Abstützelement (6) als ein eine bestimmte Form aufweisendes Blech ausgebildet ist.

6. Lenkvorrichtung nach einem der vorhergehenden Ansprüche, **dadurch gekennzeichnet,** das das Abstützelement (6) als energieverzehrendes Deformationselement ausgebildet ist.

7. Lenkvorrichtung nach einem der vorhergehenden Ansprüche, **dadurch gekennzeichnet, daß** das Abstützelement (6) im wesentlichen eine U-Form mit zwei zu seinem Querbereich (8) schräge verlaufenden Schenkeln (9) aufweist.

8. Lenkvorrichtung nach einem der vorhergehenden Ansprüche, **dadurch gekennzeichnet, daß** jeder schräg verlaufende Schenkel (9) zusätlich einen zum Querbereich (8) im wesentlichen parallel verlaufenden Seitenbereich (10) aufweist.

9. Lenkvorrichtung nach einem der vorhergehenden Ansprüche, **dadurch gekennzeichnet, daß** die Seitenbereiche (10) auf der Abdeckplatte (5) aufliegen.

10. Lenkvorrichtung nach einem der vorhergehenden Ansprüche, **dadurch gekennzeichnet, daß** die Abdeckplatte (5) als Einlage in der Unterschale ausgebildet ist.

11. Lenkvorrichtung nach einem der vorhergehenden Ansprüche, **dadurch gekennzeichnet, daß** die Abdeckplatte (5) an den seitlichen Randbereichen entsprechend gelagert ist.

12. Lenkvorrichtung nach einem der vorhergehenden Ansprüche, **dadurch gekennzeichnet, daß** die unteren Enden (11) des Lenkungsbockes (3) im wesentlichen oberhalb der schräg verlaufenden Schenkel (9) vorgesehen sind.

13. Lenkvorrichtung nach einem der vorhergehenden Ansprüche, **dadurch gekennzeichnet, daß** die unteren Enden (11) des Lenkungsbockes (3) nach außen gekrümmt sind.

14. Lenkvorrichtung nach dem vorhergehenden Anspruch, **dadurch gekennzeichnet, daß** das Abstützelement (6) als integraler Bestandteil der Abdeckplatte (5) ausgebildet ist.

## Claims

1. Height-adjustable steering apparatus (1) for a motor vehicle, comprising:
- a steering column (2),
- a steering gear mounting (3) for supporting or mounting the steering column (2) with a lower region (4) which extends in the direction of a knee region of a vehicle driver,
- a covering plate (5) which is provided between the lower region (4) of the steering gear mounting (3) and the knee region, and
- a support element (6) which is arranged between the lower region (4) of the steering gear mounting (3) and the covering plate (5),
**characterized**
- **in that** two free lower ends (11) of the steering gear mounting (3), at its lower region (4), make contact with the support element (6), and
- **in that** the free lower ends (11) spread laterally outwards transversely to the force action direction as a consequence of a movement or deformation of the steering column (2) in the event of a force from the knee of the driver acting on the covering plate (5) as the result of an accident.

2. Steering apparatus according to the preceding claim, **characterized in that** the steering gear mounting (3) is of substantially U-shaped design.

3. Steering apparatus according to one of the preceding claims, **characterized in that** the steering gear mounting (3) has two substantially rectilinearly extending limbs (7).

4. Steering apparatus according to one of the preceding claims, **characterized in that** the steering column (2) is guided in the region between the limbs (7).

5. Steering apparatus according to one of the preceding claims, **characterized in that** the support element (6) is configured as a metal sheet having a defined shape.

6. Steering apparatus according to one of the preceding claims, **characterized in that** the support element (6) is configured as an energy-absorbing deformation element.

7. Steering apparatus according to one of the preceding claims, **characterized in that** the support element (6) is substantially U-shaped having two limbs (9) which extend obliquely with respect to its transverse region (8).

8. Steering apparatus according to one of the preceding claims, **characterized in that** each obliquely extending limb (9) additionally has a lateral region (10) which extends substantially parallel to the transverse region (8).

9. Steering apparatus according to one of the preceding claims, **characterized in that** the lateral regions (10) rest on the covering plate (5).

10. Steering apparatus according to one of the preceding claims, **characterized in that** the covering plate (5) is configured as an insert in the lower shell.

11. Steering apparatus according to one of the preceding claims, **characterized in that** the covering plate (5) is mounted at the lateral edge regions in an appropriate manner.

12. Steering apparatus according to one of the preceding claims, **characterized in that** the lower ends (11) of the steering gear mounting (3) are provided substantially above the obliquely extending limbs (9).

13. Steering apparatus according to one of the preceding claims, **characterized in that** the lower ends (11) of the steering gear mounting (3) are curved outwards.

14. Steering apparatus according to the preceding claim, **characterized in that** the support element (6) is configured as an integral component of the covering plate (5).

## Revendications

1. Système de direction réglable en hauteur (1) pour un véhicule automobile, comprenant :
- une colonne de direction (2),
- un bloc de direction (3) pour le support ou le positionnement de la colonne de direction (2) avec une région inférieure (4) qui s'étend dans la direction d'une région des genoux d'un conducteur du véhicule,
- une plaque de recouvrement (5) qui est prévue entre la région inférieure (4) du bloc de direction (3) et la région des genoux, et
- un élément de support (6) qui est disposé entre la région inférieure (4) du bloc de direction (3) et la plaque de recouvrement (5),
**caractérisé en ce que**
- le bloc de direction (3) vient en contact au niveau de sa région inférieure (4) avec deux extrémités libres inférieures (11) sur l'élément de support (6), et
- suite à un mouvement ou à une déformation de la colonne de direction (2) lorsqu'une force du genou du conducteur agit sur la plaque de recouvrement (5) en cas d'accident, les deux extrémités libres inférieures (11) s'écartent latéralement vers l'extérieur transversalement à la direction d'action de la force.

2. Système de direction selon la revendication 1, **caractérisé en ce que** le bloc de direction (3) est réalisé essentiellement en forme de U.

3. Système de direction selon l'une quelconque des revendications précédentes, **caractérisé en ce que** le bloc de direction (3) présente deux branches (7) s'étendant essentiellement en ligne droite.

4. Système de direction selon l'une quelconque des revendications précédentes, **caractérisé en ce que** la colonne de direction (2) est guidée dans la région entre les branches (7).

5. Système de direction selon l'une quelconque des revendications précédentes, **caractérisé en ce que** l'élément de support (6) est réalisé sous forme de tôle présentant une forme définie.

6. Système de direction selon l'une quelconque des revendications précédentes, **caractérisé en ce que** l'élément de support (6) est réalisé sous forme d'élément déformable absorbant l'énergie.

7. Système de direction selon l'une quelconque des revendications précédentes, **caractérisé en ce que** l'élément de support (6) présente essentiellement une forme en U avec deux branches (9) s'étendant obliquement par rapport à sa région transversale (8).

8. Système de direction selon l'une quelconque des revendications précédentes, **caractérisé en ce que** chaque branche (9) s'étendant obliquement présente en outre une région latérale (10) s'étendant essentiellement parallèlement à la région transversale (8).

9. Système de direction selon l'une quelconque des revendications précédentes, **caractérisé en ce que** les régions latérales (10) s'appliquent sur la plaque de recouvrement (5).

10. Système de direction selon l'une quelconque des revendications précédentes, **caractérisé en ce que** la plaque de recouvrement (5) est réalisée en tant qu'insert dans la coque inférieure.

11. Système de direction selon l'une quelconque des revendications précédentes, **caractérisé en ce que** la plaque de recouvrement (5) est montée de manière correspondante au niveau des régions de bord latérales.

12. Système de direction selon l'une quelconque des revendications précédentes, **caractérisé en ce que** les extrémités inférieures (11) du bloc de direction (3) sont prévues essentiellement au-dessus des branches (9) s'étendant obliquement.

13. Système de direction selon l'une quelconque des revendications précédentes, **caractérisé en ce que** les extrémités inférieures (11) du bloc de direction (3) sont courbées vers l'extérieur.

14. Système de direction selon la revendication précédente, **caractérisé en ce que** l'élément de support (6) est réalisé sous forme de composant intégral de la plaque de recouvrement (5).
